**Europäisches Patentamt**

**European Patent Office**

**Office européen des brevets**

(19)

(11) Veröffentlichungsnummer : **0 371 234 B1**

(12)

# EUROPÄISCHE PATENTSCHRIFT

(45) Veröffentlichungstag der Patentschrift :
**22.07.92 Patentblatt 92/30**

(51) Int. Cl.⁵ : **F16B 12/20**

(21) Anmeldenummer : **89118540.7**

(22) Anmeldetag : **06.10.89**

(54) **Beschlag, insbesondere für Tablare.**

(30) Priorität : **19.10.88 DE 8813183 U**

(43) Veröffentlichungstag der Anmeldung :
**06.06.90 Patentblatt 90/23**

(45) Bekanntmachung des Hinweises auf die
Patenterteilung :
**22.07.92 Patentblatt 92/30**

(84) Benannte Vertragsstaaten :
**AT BE CH DE ES FR GB GR IT LI LU NL SE**

(56) Entgegenhaltungen :
**AT-B- 371 575**
**DE-A- 3 546 396**
**GB-A- 916 596**

(73) Patentinhaber : **Häfele KG**
**Postfach 160 Freudenstädter Strasse 74**
**W-7270 Nagold (DE)**

(72) Erfinder : **Walz, Rüdiger**
**Mozartstrasse 56**
**W-7270 Nagold-Hochdorf (DE)**

(74) Vertreter : **Schmid, Berthold, Dipl.-Ing. et al**
**Kohler Schmid + Partner Patentanwälte**
**Ruppmannstrasse 27**
**W-7000 Stuttgart 80 (DE)**

EP 0 371 234 B1

Jouve, 18, rue Saint-Denis, 75001 PARIS

## Beschreibung

Die Erfindung betrifft einen Beschlag, insbesondere für Tablare, mit in einer Ausnehmung einer Platte, vor allem Tablar, eingelassener Halterung und in eine Nut derselben eingreifendem Befestigungsglied, welches zur Anbringung an einem Wandteil ausgebildet ist und eine quer zu seiner Einschubrichtung verlaufende Vertiefung aufweist, wobei in der Halterung drehbar ein zum Eingriff in die Vertiefung ausgebildetes Verriegelungsglied gelagert ist, welches das Befestigungsglied in der entriegelten Drehstellung freigibt. Ein solcher Beschlag ist aus der DE-A-35 46 396 bekannt.

Bei dem bekannten Beschlag besteht das Befestigungsglied aus einem Bolzen, der eine nutartige Vertiefung an seinem Einsteckende trägt. In diese Vertiefung greift das in seiner Halterung drehbar gelagerte Verriegelungsglied ein und spannt den Bolzen nach etwa einer halben Umdrehung ein.

Die Nachteile des bekannten Beschlags sind erstens darin zu sehen, daß das Verriegelungsglied getrennt von der Halterung und erst nach Einsetzen des Bolzens in die Halterung eingedreht wird und zum anderen, daß der Bolzen quer zu seiner Einsteckrichtung verspannt wird, so daß auf diesen Scherkräfte einwirken.

Es ist demgegenüber Aufgabe der vorliegenden Erfindung, einen einfach aufgebauten Beschlag zur Befestigung einer Platte, insbesondere eines Tablars, an einem Wandteil so zu schaffen, daß Halterung und Verriegelungsglied eine Einheit bilden und daß eine sichere und genau definierbare Verriegelung der Platte am Wandteil in beiden Richtungen erfolgen kann.

Diese Aufgabe wird erfindungsgemäß durch die im Patentanspruch 1 gekennzeichneten Merkmale gelöst. Die abhängigen Ansprüche 2 bis 8 kennzeichnen jeweils vorteilhafte Ausbildung davon.

Nach dem Aufschieben der im Tablar festgelegten Halterung auf das Befestigungsglied ist nunmehr lediglich noch eine Drehung der Scheibe bis zum Eingriff in die Vertiefung erforderlich, um eine sichere Festlegung des Tablars in beiden Richtungen zu erreichen. Dabei ist der Beschlag ausgesprochen einfach aufgebaut und weist neben der Halterung und dem Befestigungsglied lediglich die drehbare Sperrscheibe auf, die eine Einheit mit der Halterung bildet.

Beim Drehen der Sperrscheibe wird das Befestigungsglied vorteilhafterweise fest an seinen Anschlag und damit an die Halterung angepreßt. Zweckmäßigerweise ist das Befestigungsglied winkelförmig ausgebildet, greift mit seinem einen Schenkel, welcher gleichzeitig zur Wandbefestigung dient, in die Nut der Halterung ein und überdeckt diese mit seinem anderen Schenkel. Um die Scheibe leichter drehen zu können, weist diese einen Ansatz für ein Werkstück auf. Der diesen Ansatz überdeckende Schenkel des Befestigungsgliedes ist mit einer Durchtrittsöffnung für das Werkzeug versehen.

Nach einem weiteren Merkmal der Erfindung ist die Sperrscheibe mit einem zweiten Verriegelungsglied verbunden, welches mit einem Ansatz am Befestigungsglied zusammenwirkt. Dadurch ergibt sich in der Verriegelungsstellung eine besonders spielfreie Befestigung der Teile aneinander. Bei einer bevorzugten Ausführungsform ist die Sperrscheibe mit dem als Kreissegment ausgestalteten zweiten Verriegelungsglied über eine drehbar in einem Sockel innerhalb der Halterung gelagerten Achse verbunden, wobei die beiden Teile auf sich gegenüberliegenden Seiten des Sockels angeordnet sind.

An der dem zweiten Verriegelungsglied zugekehrten Seite der Sperrscheibe ist zweckmäßigerweise eine als Gewindegang ausgebildete Buchse angeordnet, welche auf dem Sockel aufliegt. Außerdem ist für die Achse ein Spiel entsprechend der Gewindesteigung vorgesehen. Dadurch ergeben sich zwei wesentliche Vorteile. In der entriegelten Stellung liegt der Ansatz für das Werkzeug plan mit der Oberkante der Halterung, so daß mit derartigen Halterungen versehene Platten ohne Schwierigkeiten und ohne Zwischenlagen aufeinander gestapelt werden können. Beim Verriegeln hebt sich der Ansatz an und liegt anschließend plan mit der Oberfläche des Befestigungsgliedes, wo-durch das Aussehen des Beschlages erheblich verbessert wird. Durch Anschläge kann die Drehbewegung der Scheibe begrenzt werden, so daß die Sperr- und die Entriegelungsstellung genau definiert sind. Zur Montage der Achse mit Sperrscheibe und Verriegelungsglied weist die Halterung zweckmäßig eine Durchtrittsöffnung für das Verriegelungsglied auf, welche durch eine Raste verengt ist. Dadurch wird die Montage der Teile vereinfacht, indem man lediglich die Achse mit dem Verriegelungsglied in die Öffnung einsetzt und die Raste mit Druck überwindet, so daß die Teile unverlierbar miteinander verbunden sind.

Die Zeichnung zeigt ein Ausführungsbeispiel der Erfindung. Es stellen dar:

Fig. 1 einen Querschnitt durch ein mittels des erfindungsgemäßen Beschlages an einer Seitenwand befestigtes Tablar in der verriegelten Stellung,

Fig. 2 eine Darstellung nach Fig. 1 in der Offenstellung,

Fig. 3 eine Draufsicht auf einen Beschlag nach Fig. 1, wobei nur das halbe Befestigungselement dargestellt ist.

Zur Verbindung eines Tablars 1 mit einer Seitenwand 2 dient ein Beschlag 3. Dieser besteht aus einer etwa zylinderförmigen Halterung 4, welche in eine Ausnehmung 5 des Tablars 1 eingelassen ist. Innerhalb der Halterung 4 ist ein Sockel 6 vorgesehen, welcher zur drehbaren Lagerung einer Achse 7 dient. Am einen Ende der Achse 7 sind eine im Umriß etwas mehr als halbkreisförmige Sperrscheibe 8 und am anderen Ende ein segmentförmiges Verriegelungsglied 9 angeordnet. An der dem Verriegelungsglied 9 gegenüberliegenden Seite der Sperrscheibe 8 befindet sich eine als Gewindegang ausgebildete Buchse 10, welche auf dem Sockel 6 der Halterung 4 aufliegt. Die Achse 7 lagert mit einem Spiel im Sockel 6, welches der Steigung des Gewindegangs der Buchse 10 entspricht. Zur Erleichterung des Drehens der Achse 7 mit der Sperrscheibe 8 und dem Verriegelungsglied 9 ist ein Ansatz 16 für ein nicht dargestelltes Werkzeug vorgesehen.

Bei 11 ist mit der Seitenwand 2 ein winkelförmiges Befestigungsglied 12 verschraubt. Der zur Verschraubung dienende Schenkel 13 ist in eine Nut 14 der Halterung 4 eingeschoben. Der Schenkel 15 überdeckt die Halterung 4 und weist eine Durchtrittsöffnung 17 für den Ansatz 16 der Sperrscheibe 8 auf. Zum Eingriff der Sperrscheibe 8 ist im Befestigungsglied 12 eine quer zur Einschubrichtung 18 der Halterung 4 gegenüber dem Befestigungsglied 12 angeordnete nutartige Vertiefung 19 vorgesehen. Zur Festlegung des Verriegelungsgliedes 9 weist das Befestigungsglied 12 einen Ansatz 20 auf. Die Anlagefläche 21 in der nutartigen Vertiefung 19 des Befestigungsgliedes 12 steigen in Drehrichtung der Sperrscheibe 8 und deren Anlagefläche in entgegengesetzter Richtung an.

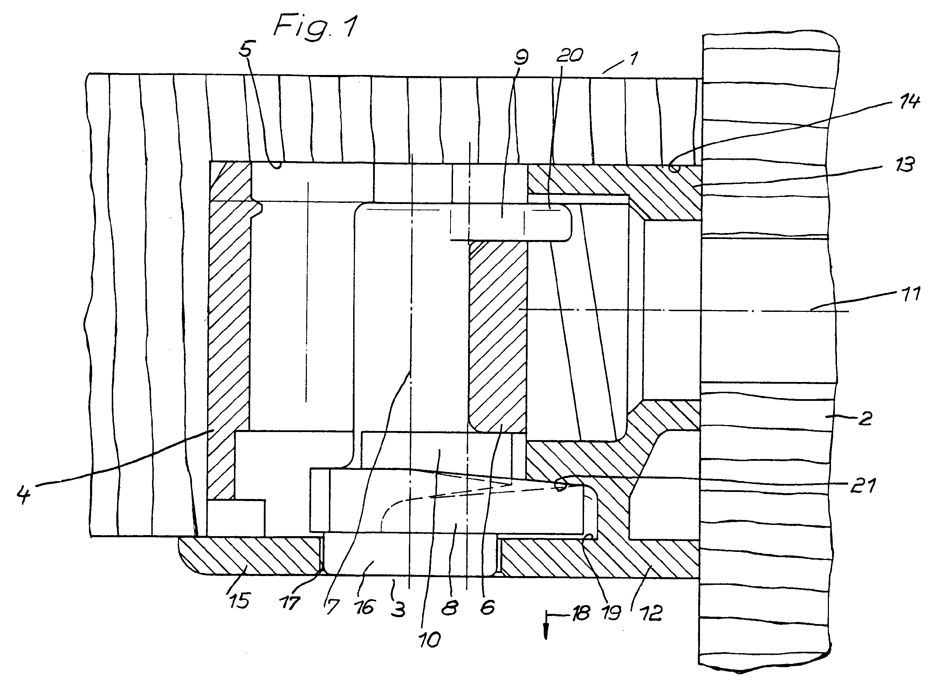

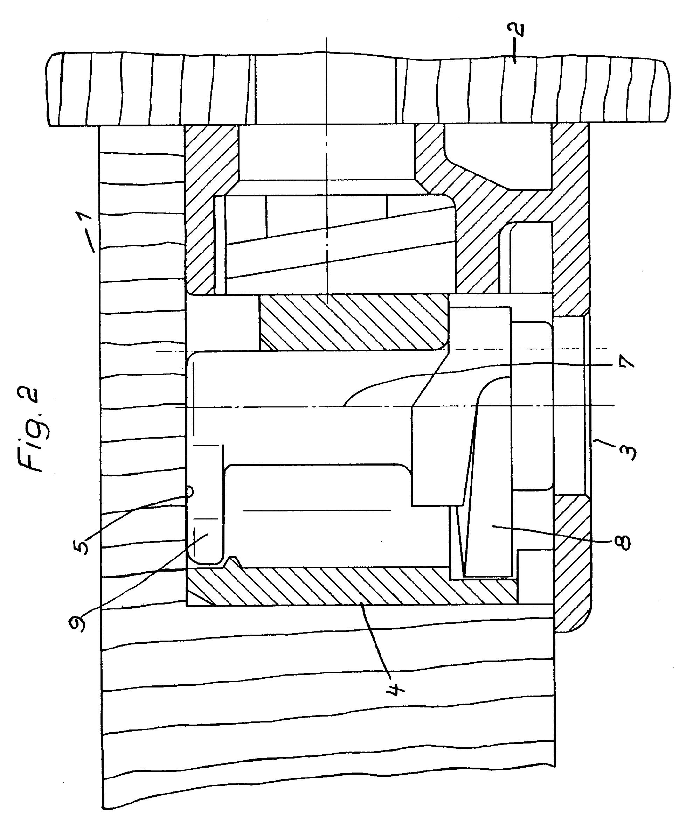

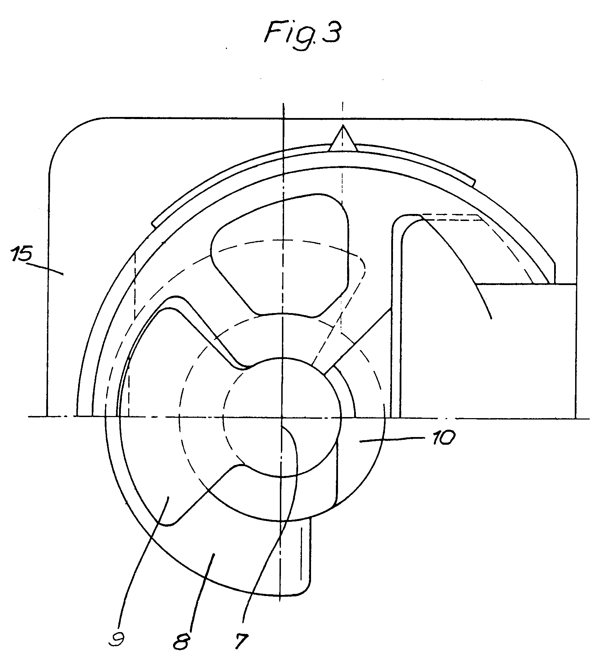

Wenn der Ansatz in Fig. 3 entgegen dem Uhrzeigersinn gedreht wird, schwenken die Sperrscheibe 8 und das Verriegelungsglied 9 aus der in Fig. 2 dargestellten entriegelten Stellung in die verriegelte Stellung nach Fig. 1. Während der Ansatz in der entriegelten Stellung nach Fig. 2 bündig mit der Oberkante der Halterung 4 bzw. der Oberfläche des Tablars 1 liegt, um eine Stapelung von mehreren Tablaren ohne Zwischenlage zu erlauben, drückt die auf dem Sockel aufliegenden Buchse durch ihre gewindeförmige Ausbildung die Achse 7 bei Drehung in Pfeilrichtung 18, so daß in der verriegelten Stellung nach Fig. 1 der Ansatz 16 bündig mit der Oberfläche des Schenkels 15 des Befestigungsgliedes 12 liegt, wodurch sich ein glattes Aussehen ergibt. Die Sperrscheibe 18 ist dabei in die nutartige Vertiefung 19 eingetreten, wobei durch die ansteigende Gestaltung beider Teile ein Anpressen des Befestigungsgliedes 12 gegenüber der Halterung 4 und damit des Tablars 1 gegenüber der Seitenwand 2 erfolgt. Bei der Drehbewegung der Achse 7 schwenkt auch das Verriegelungsglied 9 in die Sperrstellung oberhalb des Ansatzes 20. Dadurch ergibt sich eine Festlegung des Befestigungsgliedes 12 gegenüber der Halterung 4 sowohl in Richtung des Pfeiles 18 als auch in Gegenrichtung.

## Patentansprüche

1. Beschlag, insbesondere für Tablare, mit in einer Ausnehmung einer Platte, vor allem Tablar (1), eingelassener Halterung (4) und in eine Nut (14) derselben eingreifendem Befestigungsglied (12), welches zur Anbringung an einem Wandteil (2) ausgebildet ist und eine quer zu seiner Einschubrichtung (18) verlaufende Vertiefung aufweist, wobei in der Halterung (4) drehbar ein zum Eingriff in die Vertiefung ausgebildetes Verriegelungsglied gelagert ist, welches das Befestigungsglied (12) in der entriegelten Drehstellung freigibt, dadurch gekennzeichnet, daß die Vertiefung (19) als Nut ausgebildet ist, das Verriegelungsglied eine Sperrscheibe (8) mit einem etwa halbkreisförmigen Umriß ist und eine Auflagefläche (21) der Nut (19) in Schließdrehrichtung der Sperrscheibe (8) und die Anlagefläche (22) der Sperrscheibe (8) in entgegengesetzter Richtung ansteigen, so daß ein Anpressen des Befestigungsglieds (12) gegen die Halterung (4) erfolgt.

2. Beschlag nach Anspruch 1, dadurch gekennzeichnet, daß das Befestigungsglied (12) winkelförmig ausgebildet ist, mit seinem einen, gleichzeitig zur Wandbefestigung (2, 11) dienenden Schenkel (13) in die Nut (14) der Halterung (4) eingreift und diese mit seinem anderen Schenkel (15) überdeckt.

3. Beschlag nach Anspruch 1 oder 2, dadurch gekennzeichnet, daß die Sperrscheibe (8) mit einem Ansatz (16) für ein Werkzeug versehen ist und der diesen überdeckende Schenkel (15) des Befestigungsgliedes (12) eine Durchtrittsöffnung (17) hierfür aufweist.

4. Beschlag nach einem der vorhergehenden Ansprüche, dadurch gekennzeichnet, daß mit der Sperrscheibe (8) ein zweites Verriegelungsglied (9) verbunden ist, welches mit einem Ansatz (20) am Befestigungsglied (12) zusammenwirkt.

5. Beschlag nach Anspruch 4, dadurch gekennzeichnet, daß die Sperrscheibe (8) mit dem als Kreissegment ausgestalteten zweiten Verriegelungsglied (9) über eine drehbar in einem Sockel (6) innerhalb der Halterung (4) gelagerten Achse (7) verbunden ist, wobei beide Teile auf gegenüberliegenden Seiten des Sockels (6) angeordnet sind.

6. Beschlag nach Anspruch 5, dadurch gekennzeichnet, daß an der dem zweiten Verriegelungsglied (9) zugekehrten Seite der Sperrscheibe (8) eine als Gewindegang ausgebildete Buchse (10) angeordnet ist, welche auf dem Sockel (6) der Halterung (4) aufliegt und für die Achse (7) ein Spiel entsprechend der Gewindesteigung vorgesehen ist.

7. Beschlag nach einem der vorhergehenden Ansprüche, gekennzeichnet durch Anschläge zur Begrenzung der Drehstellung der Sperrscheibe (8)

8. Beschlag nach einem der vorhergehenden Ansprüche, dadurch gekennzeichnet, daß der Sockel (6) eine Durchtrittsöffnung für das zweite Verriegelungsglied (9) aufweist, welche durch eine Raste verengt ist.

## Claims

1. A fitting, particularly for panels, with a holder (4) let into a recess in a panel (1) and, engaging a groove (14) therein, a fixing member (12) which is constructed to be mounted on a wall part (2) and which has a depression extending crosswise to its push-in direction (18), wherein rotatably mounted in the holder (4) and constructed for engagement in the depression there is an interlocking member which releases the fixing member (12) in the unlocked rotated position, characterised in that the depression (19) is constructed as a groove, the interlocking member is a locking disc (8) having a substantially semi-circular outline and in that a supporting surface (21) in the groove (19) rises in the direction of closing rotation of the locking disc (8) while the hearing surface (22) of the locking disc (8) rises in the opposite direction, so that the fixing member (12) is pressed against the holder (4).

2. A fitting according to claim 1, characterised in that the fixing member (12) is of angular construction, has its one arm (13) which at the same time serves as a wall fixing (2, 11) engaging into the groove (14) in the holder (4) while its other arm (15) covers it.

3. A fitting according to claim 1 or 2, characterised in that the locking disc (8) is provided with an attachment (16) for a tool and in that the arm (15) of the fixing member (12) which covers this has an aperture (17) through which the tool can pass.

4. A fitting according to one of the preceding claims, characterised in that connected to the locking disc (8) is a second interlocking member (9) which co-operates with an attachement (20) on the fixing member (12).

5. A fitting according to claim 4, characterised in that the locking disc (8) is connected to the second interlocking member (8) which is constructed as a segment of a circle, via a spindle (7) rotatably mounted in a base (7) within the holder (4), both parts being disposed on opposite sides of the base (6).

6. A fitting according to claim 5, characterised in that on the side of the locking disc (8) which is towards the second interlocking member (9) there is, constructed as a screwthread, a bush (10) which rests on the base (6) of the holder (4) and that a clearance according to the screwthread pitch is provided for the spindle (7).

7. A fitting according to one of the preceding claims, characterised by abutments to limit the rotary position of the locking disc (8).

8. A fitting according to one of the preceding claims, characterised in that the base (6) has an aperture through which the second interlocking member (9) can pass and which is narrowed by a catch.

## Revendications

1. Ferrure, notamment pour rayons de rayonnages, comprenant un support (4) inséré dans un évidement pratiqué dans une plaque, en particulier dans un rayon (1) pour rayonnages, et un élément (12) de fixation s'engageant dans une rainure (14) pratiquée dans ce support, cet élément de fixation étant conçu pour être fixé sur un élément (2) de paroi et comportant un renfoncement qui s'étend transversalement au sens (18) de son insertion, un élément de verrouillage étant logé de façon à pouvoir tourner dans le support (4) et étant destiné à s'engager dans le renfoncement, cet élément libérant l'élément (12) de fixation lorsqu'il se trouve dans la position de rotation de déverrouillage, caractérisée en ce que le renfoncement (19) est réalisé sous forme d'une rainure, en ce que l'élément de verrouillage est constitué par une rondelle (8) de blocage, ayant un contour à peu près semi-circulaire, et en ce qu'une face (21) d'appui de la rainure (19) est ascendante dans le sens de la rotation de verrouillage de la rondelle (8) de blocage, et en ce que la face (22) d'appui de la rondelle (8) de blocage est ascendante dans le sens opposé, de telle sorte qu'il en résulte une pression de l'élément (12) de fixation contre le support (4).

2. Ferrure selon la revendication 1, caractérisée en ce que l'élément (12) de fixation est réalisé sous une forme angulaire, s'engage dans la rainure (14) du support (4) par l'une (13) de ses branches, qui sert en même à la fixation de la paroi (2, 11), et recouvre le support par son autre branche (15).

3. Ferrure selon la revendication 1 ou 2, caractérisée en ce que la rondelle (8) de blocage est pourvue d'un appendice (16) pour un outil, et en ce que la branche (15) de l'élément (12) de fixation, qui recouvre cet appendice, comporte une ouverture 17 laissant passer ce dernier.

4. Ferrure selon l'une de revendications précédentes, caractérisée en ce qu'un deuxième élément (9) de verrouillage est relié à la rondelle (8) de blocage, ce deuxième élément agissant en association avec un talon (20) agencé sur l'élément (12) de fixation.

5. Ferrure selon la revendication 4, caractérisée en ce que la rondelle (8) de blocage est reliée au deuxième élément (9) de verrouillage, réalisé sous forme d'un segment de cercle, par l'intermédiaire d'un axe (7) logé de façon à pouvoir tourner dans un socle (6) disposé à l'intérieur du support (4), les deux pièces étant disposées aux côtés opposés du socle (6).

6. Ferrure selon la revendication 5, caractérisée en ce qu'une bague (10) réalisée sous forme d'un pas de vis est disposée sur la face de la rondelle (8) de blocage, qui est orientée face au deuxième élément (9) de verrouillage, cette bague reposant sur le socle (6) du support (4), et en ce qu'un certain jeu, qui correspond au pas du filetage, est prévu pour l'axe (7).

7. Ferrure selon l'une des revendications précédentes, caractérisée par des butées délimitant les positions de rotation de la rondelle (8) de blocage.

8. Ferrure selon l'une des revendications précédentes, caractérisée en ce que le socle (6) comporte une ouverture de passage pour le deuxième élément (9) de vérrouillage, cette ouverture se trouvant rétrécie par un cran d'arrêt.

Fig. 1

Fig. 2

# Fig.3